# EUROPÄISCHE PATENTSCHRIFT

(11) **EP 1 941 198 B1**
(45) Veröffentlichungstag und Bekanntmachung des Hinweises auf die Patenterteilung: **21.01.2009**
(21) Anmeldenummer: 06793693.0
(22) Anmeldetag: 21.09.2006
(51) Int. Cl.: F16K 31/06

(54) **MAGNETVENTIL**
SOLENOID VALVE
SOUPAPE ELECTROMAGNETIQUE

(30) Priorität: 20.10.2005 DE 102005050276
(43) Veröffentlichungstag der Anmeldung: 09.07.2008
(73) Patentinhaber: ROBERT BOSCH GMBH, 70442 Stuttgart (DE)
(72) Erfinder: PFETZER, Johannes, 77815 Buehl (DE); REEB, Georg, 77815 Buehl Eisental (DE)
(86) Internationale Anmeldenummer: PCT/EP2006/066568
(87) Internationale Veröffentlichungsnummer: WO 2007/045535

(56) Entgegenhaltungen:
- DE-U1- 20 302 911
- GB-A- 2 227 074
- JP-A- 60 069 379

## Beschreibung

### Stand der Technik

Die Erfindung geht von einem Magnetventil nach dem Oberbegriff des Anspruchs 1 aus.

Aus der DE 36 10 122 A1 ist ein Magnetventil bekannt, bei dem eine Magnetspule einen zentralen Durchflusskanal umgibt, der zwischen einem Zulaufstutzen und einem Ablaufstutzen vorgesehen ist. Der Zulaufstutzen und der Ablaufstutzen besitzen Anschlussmöglichkeiten für eine Schlauchleitung. In dem Durchflusskanal ist zwischen einem Ventilsitz und einem Anschlag ein Schließkörper axial verschieblich angeordnet, der durch die Strömung eines Fluids, einer Flüssigkeit oder eines Gases in der geöffneten Stellung an dem Anschlag anliegt. In der Schließstellung wirkt er mit dem Ventilsitz zusammen. Die Schließstellung wird erreicht, wenn die Magnetspule bestromt wird oder wenn eine Rückströmung auf den Schließkörper ein-wirkt. Der Schließkörper ist als Magnetanker ausgebildet und wird im Durchflusskanal durch Längsstege an seinem Umfang geführt, die in geöffneter Stellung des Schließkörpers eine Umströmun desselben zulassen. Dokument GB 2 227 074 zeigt zusätzlich, dass der Schließkörper in einer Führungshülse geführt ist, die in den Durchflusskanal eingesetzt ist und an ihrem Umfang axiale Durchlässe besitzt.

### Vorteile der Erfindung

Nach der Erfindung ist ein Bewegungsspalt zwischen der Führungshülse und dem Schließkörper, der an der dem Ventilsitz zugewandten Stirnseite der Führungshülse aus dieser herausragt, bzw. seinem Ankerteil, ist durch mindestens einen Faltenbalg aus einem flexiblen Kunststoff abgedichtet. Grundsätzlich kann der Schließkörper in einem Sackloch der Führungshülse geführt sein, sodass zur Abdichtung des Bewegungsspalts nur ein Faltenbalg erforderlich ist. Dieser überzieht zweckmäßigerweise den Schließkörper an seiner dem Ventilsitz zugewandten Stirnseite, die eine pilzförmige Außenkontur aufweist. Der Faltenbalg kann somit als Anschlagsdämpfung und Dichtung des Ventilsitzes dienen. An seinem freien Ende ist der Faltenbalg in vorteilhafter Weise an einem axialen Vorsprung der Führungshülse dichtend eingeknöpft.

Der Bewegungsspalt zwischen der Führungshülse und dem Schließkörper ist so bemessen, dass ein Fluidaustausch zwischen einem dem Ventilsitz zugewandten Ankerraum, der von dem zugeordneten Faltenbalg begrenzt wird, und einem Raum an der entgegengesetzten Stirnseite möglich ist. Dieser Raum kann das Ende des Sacklochs sein. Der Fluidaustausch kann durch die Dimensionierung des Bewegungsspalts so gesteuert werden, dass eine gewünschte Dämpfung der Bewegung des Schließkörpers erreicht wird. Der Ankerraum und der weitere Raum werden vor der ersten Inbetriebnahme gefüllt, jedoch kann der Faltenbalg auch sehr kleine Bohrungen aufweisen, durch die eine Unterdruckbefüllung möglich ist. Die Bohrungen sind jedoch so klein, dass sie keine Schmutzpartikel durchlassen, die einen Verschleiß bzw. ein Blockieren des Schließkörpers in der Führungshülse verursachen könnten.

Ist der Schließkörper in einer Durchgangsbohrung der Führungshülse geführt, ist es zweckmäßig, dass an der dem Ventilsitz abgewandten Stirnseite des Schließkörpers ein Anschlagpilz vorgesehen ist, der axial aus der Führungshülse herausragt und sich in geöffneter Stellung des Schließkörpers an einem Anschlag abstütz. Der Anschlagpilz ist ebenfalls von einem Faltenbalg abgeschirmt, der auch als Anschlagdämpfer dient. Der Faltenbalg am Schließkörper und der Faltenbalg am Anschlagpilz können Gleichteile sein, die aus einem Elastomer gefertigt sind. Durch die Faltenbälge sind die innen liegenden Räume zur Führung des Schließkörpers nach außen hin abgedichtet, sodass mit langen, störungsfreien Betriebszeiten gerechnet werden kann. Um ein Verrutschen der Faltenbälge am Schließkörper bzw. am Anschlagpilz zu vermeiden, besitzen die Faltenbälge an ihren Stirnseiten nach innen gerichtete Verdickungen, die in entsprechende Vertiefungen des Schließkörpers bzw. des Anschlagpilzes eingreifen und somit die Faltenbälge fixieren.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

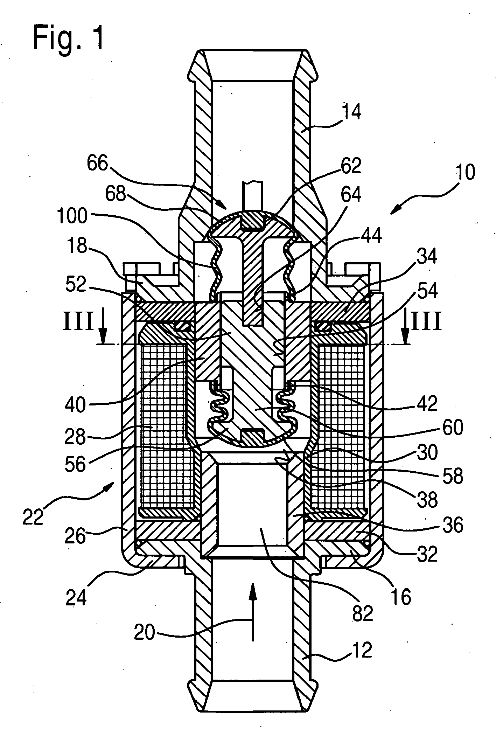

- Fig. 1: einen Längsschnitt eines erfindungsgemäßen Magnetventils im geöffneten Zustand,

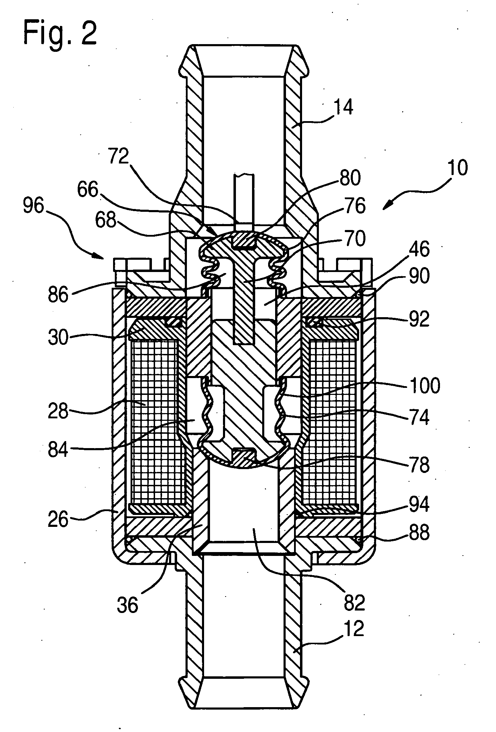

- Fig. 2: einen Längsschnitt eines erfindungsgemäßen Magnetventils im geschlossenen Zustand und
- Fig. 3: einen Querschnitt entsprechend der Linie.III-III in Fig. 1.

### Beschreibung der Ausführungsbeispiele

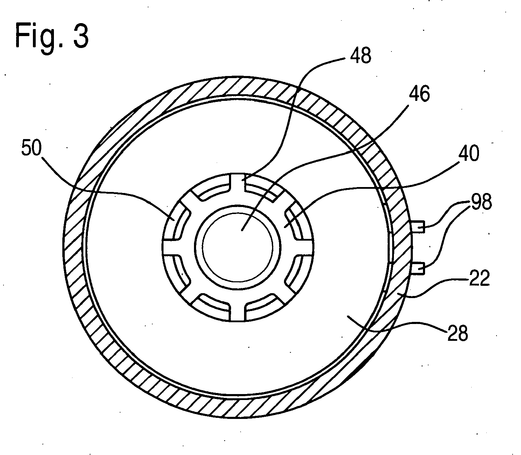

Ein Magnetventil 10 umgibt mit seiner Magnetspule 28 einen Durchflusskanal 82, der von einem Zulaufstutzen 12, einem Magnetjoch 36, einem Spulenträger 30 und einem Ablaufstutzen 14 gebildet wird. Die Magnetspule 28 wird mit ihrem Spulenträger 30 zwischen einem Flansch 16 des Zulaufstutzens 12 und einem Flansch 18 des Ablaufstutzens 14 gehalten, indem ein im Längsschnitt 1-förmiges Polgehäuse 22 mit einer Stirnwand 24 von außen an dem Flansch 16 des Zulaufstutzens 12 anliegt, während sein Mantel 26 die Spule 28 und den Flansch 18 des Ablaufstutzens 14 übergreift und mit diesem nach Art eines Bajonettverschlusses 96 verbunden ist. An den Stirnseiten des Spulenträgers 30 sind Rückschlussplatten 32 und 34 vorgesehen, die an den Magnetanker 52 bzw. eine Führungshülse'40 angrenzen. Zwischen Rückschlussplatte 32 und dem Flansch 16 sowie zwischen der Rückschlussplatte 34 und dem Flansch 18 und dem Polgehäuse 22 sind Dichtungen 88, 90 vorgesehen. Ferner befindet sich zwischen der Stirnseite des Spulenträgers 30 und der Rückschlussplatte 34 eine Dichtung 92 sowie an der entgegengesetzten Stirnseite eine Dichtung 94. Durch die Dichtungen 88 bis 94 ist der elektrische Teil des Magnetventils 10 gegenüber dem hydraulischen Teil sicher abgedichtet. Die Magnetspule 28 besitzt einen Stromanschluss 98 (Fig. 3).

Das Magnetjoch 36, das an seinem Umfang zur Zentrierung des Zulaufstutzens 12 der Rückschlussplatte 32 und des Spulenträgers 30 dient, besitzt an seiner in Strömungsrichtung 20 vorderen Stirnseite einen Ventilsitz 38, der mit einem Schließkörper 56 zusammenwirkt. Dieser besitzt an seiner, dem Ventilsitz 38 zugewandten Stirnseite 58 eine pilzförmige Kontur, an die sich über einen Schaft 60 ein Magnetankerteil 52 anschließt. Der Magnetankerteil 52 des Schließkörpers 56 ist in einer Bohrung 46 einer Führungshülse 40 axial beweglich geführt. Der Schließkörper 56 ragt aus der Bohrung 46 zum Ventilsitz 38 heraus und ist mit einem Faltenbalg 74 überzogen. Dieser ist an seinem freien Ende dichtend an einem stirnseitigen Vorsprung 42 der Führungshülse 40 eingeknöpft, sodass der Bewegungsspalt 54 zwischen dem Magnetankerteil 52 und der Führungshülse 40 abgeschirmt ist.

An der dem Ventilsitz 38 abgewandten Stirnseite des Schließkörpers 56 ist ein Sackloch 64 vorgesehen, in das ein Anschlagpilz 66 mit seinem Schaft 70 eingepresst ist. Ein pilzförmiger Kopf 68 des Anschlagpilzes 66 liegt in geöffneter Stellung an Anschlägen 72 des Ablaufstutzens 14 an, die durch sternförmig angeordnete, axial verlaufende Rippen gebildet sind. Der Faltenbalg 76 ist an einem stirnseitigen Vorsprung 44 der Führungshülse 40 eingeknöpft. Er ist gleich ausgebildet wie der Faltenbalg 74 am Schließkörper 56, sodass die Faltenbälge 74, 76 Gleichteile sind. Sie besitzen an ihren Stirnflächen nach innen gerichtete Verdickungen 78, 80, die in entsprechende Vertiefungen 62 des Anschlagpilzes 66 bzw. des Schließkörpers 56 eingreifen. Die Faltenbälge 74, 76 wirken als Anschlagdämpfer für den Schließkörper 56 bzw. den Anschlagpilz 66 und schützen die Führung zwischen der Führungshülse 40 und dem Schließkörper 56 gegen das Eindringen von Schmutz, sodass mit langen störungsfreien Betriebszeiten gerechnet werden kann.

Die Faltenbälge 74, 76 begrenzen einen Ankerraum 84 und einen auf der anderen Seite des Schließkörpers 56 liegenden Raum 86. Durch die Bewegung des Schließkörpers 56 wird Fluid, Gas oder Flüssigkeit, über den Bewegungsspalt 54 vom Ankerraum 84 in den Raum 86 gefördert oder umgekehrt. Dabei kann der Bewegungsspalt 54 so dimensioniert werden, dass durch eine Drosselung des Fluidstroms eine gewünschte Dämpfung des Schließkörpers 56 erreicht wird.

Der Ankerraum 84 und der Raum 86 werden vor der ersten Inbetriebnahme des Magnetventils 10 gefüllt. Zur Unterdruckbefüllung können die Faltenbälge 74, 76 auch sehr kleine Bohrungen 100 aufweisen, die so dimensioniert sind, dass Fluid aus dem Durchflusskanal 82 in den Ankerraum 84 bzw. 86 übertreten kann, jedoch Schmutz, insbesondere magnetisierbare Partikel, abgehalten werden.

Die Führungshülse 40 besitzt an ihrem Umfang Längsstege 48, zwischen denen Durchlässe 50 gebildet werden. Die Stege 48 der Führungshülse 40 sind in den Spulenträger 30 eingepresst, sodass die Führungshülse 40 gegenüber dem Magnetjoch 36 zentriert ist.

## Patentansprüche

1. Magnetventil (10) mit einer Magnetspule (28), die koaxial zu einem Durchflusskanal (82) angeordnet ist und diesen umgibt, wobei in dem Durchflusskanal (82) ein in Längsrichtung zwischen einem Ventilsitz (38) und einem Anschlag (72) verschieblicher Schließkörper (56) vorgesehen ist, der mit dem Ventilsitz (38) zusammenwirkt und als Magnetanker (52) des Magnetventils (10) ausgebildet ist, wobei der Schließkörper (56) in einer Längsbohrung (46) der Führungshülse (40) geführt ist, die in den Durchflusskanal (82) eingesetzt ist und an ihrem Umfang axiale Durchlässe (50) besitzt, **dadurch gekennzeichnet, dass** ein Bewegungsspalt (54) zwischen der Führungshülse (40) und dem Schließkörper (56), der an der dem Ventilsitz (38) zugewandten Stirnseite der Führungshülse (40) aus dieser herausragt, bzw. seinem Magnetanker (52), durch mindestens einen Faltenbalg (74) aus einem flexiblen Kunststoff abgedichtet ist.

2. Magnetventil (10) nach Anspruch 1, **dadurch gekennzeichnet, dass** der Schließkörper (56) an seiner dem Ventilsitz (38) zugewandten Stirnseite (58) eine pilzförmige Außenkontur aufweist, die von dem zugeordneten Faltenbalg (74) überzogen ist.

3. Magnetventil (10) nach Anspruch 1 oder 2, **dadurch gekennzeichnet, dass** an der dem Ventilsitz (38) abgewandten Stirnseite des Schließkörpers (56) bzw. des Magnetankers (52) ein Anschlagpilz (66) vorgesehen ist, der axial aus der Führungshülse (40) herausragt und sich in geöffneter Stellung des Schließkörpers (56) an einem Anschlag (72) abstützt, wobei der Anschlagpilz (66) von einem Faltenbalg (76) abgeschirmt ist, der über seinen pilzförmigen Kopf (68) gezogen ist.

4. Magnetventil (10) nach einem der Ansprüche 2 oder 3, **dadurch gekennzeichnet, dass** die Faltenbälge (74, 76) an ihren Stirnseiten nach innen ragende Verdickungen (78, 80) aufweisen, die in entsprechende Vertiefungen (62) des Schließkörpers (56) bzw. des Anschlagpilzes (66) eingreifen.

5. Magnetventil (10) nach einem der vorhergehenden Ansprüche, **dadurch gekennzeichnet, dass** die Faltenbälge (74, 76) an axialen Vorsprüngen (42, 44) der Führungshülse (40) dichtend anliegen.

6. Magnetventil (10) nach Anspruch 5, **dadurch gekennzeichnet, dass** die Faltenbälge (74, 76) aus einem Elastomer gefertigte Gleichteile sind, die als Anschlagdämpfer wirken.

7. Magnetventil (10) nach einem der vorhergehenden Ansprüche, **dadurch gekennzeichnet, dass** der Bewegungsspalt (54) als Drosselstelle zwischen den durch die Faltenbälge (74, 76) begrenzten Räumen (84, 86) ausgebildet ist.

8. Magnetventil (10) nach einem der vorhergehenden. Ansprüche, **dadurch gekennzeichnet, dass** die Faltenbälge (74, 76) sehr kleine Bohrungen (100) aufweisen, die eine Unterdruckbefüllung zulassen, jedoch das Eindringen von Schmutzteilen verhindern.

9. Magnetventil (10) nach einem der vorhergehenden Ansprüche, **dadurch gekennzeichnet, dass** ein ringförmiges Magnetjoch (36) in den Durchflusskanal (82) eingesetzt ist und den Ventilsitz (38) bildet.

10. Magnetventil (10) nach einem der vorhergehenden Ansprüche, **dadurch gekennzeichnet, dass** zwischen einem Flansch (16) eines Zulaufstutzens (12) und einem Flansch (18) eines Ablaufstutzens (14) die Magnetspule (28) mit ihrem Spulenträger (30) und Rückschlussplatten (32, 34) angeordnet ist, wobei ein im Längsschnitt 1-förmiges Polgehäuse (22) die Flansche (16, 18) übergreift und an der offenen Seite mit dem zugeordneten Flansch (18) nach Art eines Bajonettverschlusses (96) verbunden ist.

## Claims

1. Solenoid valve (10) having a magnet coil (28) which is arranged coaxially to a through-flow channel (82) and surrounds the said through-flow channel, with a closing body (56) being provided in the through-flow channel (82), which closing body can move in the longitudinal direction between a valve seat (38) and a stop (72), interacts with the valve seat (38) and is in the form of a magnet armature (52) of the solenoid valve (10), with the closing body (56) being routed in a longitudinal bore (46) in the guide sleeve (40) which is inserted into the through-flow channel (82) and has axial passages (50) over its circumference, **characterized in that** a movement gap (54) between the guide sleeve (40) and the closing body (56), which projects out of the guide sleeve (40) at that end side of the guide sleeve (40) which faces the valve seat (38), or its magnet armature (52) is sealed off by at least one bellows (74) comprising a flexible plastic.

2. Solenoid valve (10) according to Claim 1, **characterized in that** the closing body (56) has a mushroom-shaped outer contour, which is covered by the associated bellows (74), at its end side (58) which faces the valve seat (38).

3. Solenoid valve (10) according to Claim 1 or 2, **characterized in that** a mushroom-like stop (66) is provided at that end side of the closing body (56) or of the magnet armature (52) which is averted from the valve seat (38), the said mushroom-like stop projecting axially out of the guide sleeve (40) and being supported against a stop (72) in the open position of the closing body (56), with the mushroom-like stop (66) being shielded by a bellows (76) which is drawn over the mushroom-shaped head (68) of the said mushroom-like stop.

4. Solenoid valve (10) according to either of Claims 2 and 3, **characterized in that** the bellows (74, 76) have inwardly projecting thickened portions (78, 80) at their end sides, the said thickened portions engaging in corresponding recesses (62) in the closing body (56) or in the mushroom-like stop (66).

5. Solenoid valve (10) according to one of the preceding claims, **characterized in that** the bellows (74, 76) rest against axial projections (42, 44) of the guide sleeve (40) in a sealing manner.

6. Solenoid valve (10) according to Claim 5, **characterized in that** the bellows (74, 76) are identical parts which are produced from an elastomer and act as stop dampers.

7. Solenoid valve (10) according to one of the preceding claims, **characterized in that** the movement gap (54) is in the form of a throttle point between the spaces (84, 86) which are bounded by the bellows (74, 76).

8. Solenoid valve (10) according to one of the preceding claims, **characterized in that** the bellows (74, 76) have very small bores (100) which permit negative pressure to be charged but prevent particles of dirt from entering.

9. Solenoid valve (10) according to one of the preceding claims, **characterized in that** an annular magnet yoke (36) in inserted into the through-flow channel (82) and forms the valve seat (38).

10. Solenoid valve (10) according to one of the preceding claims, **characterized in that** the magnet coil (28), by way of its coil carrier (30) and magnetic return plates (32, 34), is arranged between a flange (16) of an inflow nozzle (12) and a flange (18) of an outflow nozzle (14), with a pole housing (22) which is 1-shaped in longitudinal section engaging over the flanges (16, 18) and, on the open side, being connected to the associated flange (18) in the manner of a bayonet fitting (96).

## Revendications

1. Soupape électromagnétique (10) comprenant une bobine magnétique (28), qui est disposée coaxialement à un canal d'écoulement (82) et qui l'entoure, un corps de fermeture (56) déplaçable dans la direction longitudinale entre un siège de soupape (38) et une butée (72) étant prévu dans le canal d'écoulement (82), lequel coopère avec le siège de soupape (38) et est réalisé sous forme d'induit magnétique (52) de la soupape électromagnétique (10), le corps de fermeture (56) étant guidé dans un alésage longitudinal (46) de la douille de guidage (40) qui est insérée dans le canal d'écoulement (82) et possédant à sa périphérie des passages axiaux (50), **caractérisée en ce qu'**une fente de déplacement (54) entre la douille de guidage (40) et le corps de fermeture (56), qui sort de la douille de guidage (40) de son côté frontal tourné vers le siège de soupape (38), ou son induit magnétique (52), est scellée hermétiquement par au moins un soufflet (74) en plastique flexible.

2. Soupape électromagnétique (10) selon la revendication 1, **caractérisée en ce que** le corps de fermeture (56) présente sur son côté frontal (58) tourné vers le siège de soupape (38) un contour extérieur en forme de champignon, qui est recouvert par le soufflet associé (74).

3. Soupape électromagnétique (10) selon la revendication 1 ou 2, **caractérisée en ce que** sur le côté frontal du corps de fermeture (56) ou de l'induit magnétique (52), tourné à l'opposé du siège de soupape (38), est prévue une butée en forme de champignon (66), qui sort axialement de la douille de guidage (40) et qui, dans la position ouverte du corps de fermeture (56), s'appuie contre une butée (72), la butée en forme de champignon (66) étant protégée par un soufflet (76) qui est tiré par dessus sa tête (68) en forme de champignon.

4. Soupape électromagnétique (10) selon l'une quelconque des revendications 2 ou 3, **caractérisée en ce que** les soufflets (74, 76) présentent, à leurs côtés frontaux, des épaississements (78, 80) saillant vers l'intérieur, qui viennent en prise dans des renfoncements correspondants (62) du corps de fermeture (56) ou de la butée en forme de champignon (66).

5. Soupape électromagnétique (10) selon l'une quelconque des revendications précédentes, **caractérisée en ce que** les soufflets (74, 76) s'appliquent hermétiquement contre des saillies axiales (42, 44) de la douille de guidage (40).

6. Soupape électromagnétique (10) selon la revendication 5, **caractérisée en ce que** les soufflets (74, 76) sont des pièces identiques fabriquées en élastomère, qui agissent comme amortisseurs de butée.

7. Soupape électromagnétique (10) selon l'une quelconque des revendications précédentes, **caractérisée en ce que** la fente de déplacement (54) est réalisée sous forme de point d'étranglement entre les espaces (84, 86) limités par les soufflets (74, 76).

8. Soupape électromagnétique (10) selon l'une quelconque des revendications précédentes, **caractérisée en ce que** les soufflets (74, 76) présentent de très petits alésages (100) qui permettent un remplissage par dépression mais qui empêchent toutefois la pénétration de particules de saleté.

9. Soupape électromagnétique (10) selon l'une quelconque des revendications précédentes, **caractérisée en ce qu'**une culasse magnétique de forme annulaire (36) est insérée dans le canal d'écoulement (82) et forme le siège de soupape (38).

10. Soupape électromagnétique (10) selon l'une quelconque des revendications précédentes, **caractérisée en ce qu'**entre une bride (16) d'une tubulure d'admission (12) et une bride (18) d'une tubulure de sortie (14) est disposée la bobine magnétique (28) avec son support de bobine (30) et ses plaques de culasse (32, 34), un boîtier de pôle (22) en forme de 1 en coupe longitudinale venant en prise par dessus les brides (16, 18) et étant connecté au niveau du côté ouvert à la bride associée (18) à la manière d'une fermeture à baïonnette (96).
